# EUROPEAN PATENT APPLICATION

(11) **EP 1 484 527 A1**
(43) Date of publication of application: **08.12.2004**
(21) Application number: 03253488.5
(22) Date of filing: 03.06.2003
(51) Int. Cl.: F16F 9/348

(54) **Shock absorber with rotary cam backup washer for disc valve adjustment**

(71) Applicant: Arvin Technologies, Inc., Troy, MI 48084 (US)
(72) Inventor: Barbison, James, Brampton, Ontario L6Z 4C8 (CA); Erickson, Kevin, Etobicoke, Ontario M9B 6L4 (CA); Weber, Arnett R, Mississauga, Ontario L5G 1L6 (CA); Farewell, Ronald W., Mississauga, Ontario L5N 3R9 (CA); Coury, Richard, Rochester Hills, MI 48309 (US); King, Thomas R, Milton, Ontario L5G 1L6 (CA); Bell, Stephen H, Guelph, Ontario M8W 1N8 (CA); Goncalves, Nelson C, Mississauga, Ontario M8W 1N8 (CA)
(74) Representative: Jones, John Bryn

(57) **Abstract**

An adjustable shock absorber is provided that includes a body (12) defining a cavity. A member such as a piston (14) is disposed in the body and at least partially separates the cavity in two first and second fluid chambers. A port (22) extends through the piston and fluidly connects the first and second chambers during damping. A deflection disc (24), typically several, are arranged adjacent to the piston and one of the chambers to at least partially obstruct the port. A flange member (26) such as a washer is arranged in proximity to the deflection disc with the deflection disc arranged between the washer and the piston. The deflection disc (24) bends about the washer, which acts as a fulcrum, to unobstruct the port. The washer (26) has a first portion with a first radial width defining a first rate of damping and a second portion with a second radial width different than the first radial width defining a second rate of damping different than the first rate of damping. The deflection disc bends about the portion of the radial width that is in alignment with the port. Preferably, the washer is oval shaped. An adjustment member (40) such as a knob selectively rotates the washer relative to the deflection disc between the first and second radial widths.

## Description

### BACKGROUND OF THE INVENTION

This invention relates to a vehicle shock absorber, and more particularly, the invention relates to a valve adjustment mechanism for a disc valve arrangement.

Shock absorbers are used in vehicles to dampen suspension movement by absorbing the energy of impacts and dissipating it as heat. Many shock absorbers use stacks of thin metal deflection discs placed over the flow paths in the piston to impede the flow of fluid as the piston moves through the fluid in the cylinder thereby providing damping. The shock absorbers are designed to provide damping through a range of movement and a variety of impact conditions. However, to obtain different damping characteristics other deflection discs must be used, which then are undesirable for other conditions. As a result, the shock absorber may not be well suited for a particular condition. Valve adjustments have been proposed in the prior art, but are not well-suited with deflection discs. That is, other valve adjustment devices are specific to the type of valve used. Therefore, what is needed is a valve adjustment mechanism for use with deflection discs to provide shock absorber damping adjustment for a particular vehicle condition.

### SUMMARY OF THE INVENTION AND ADVANTAGES

The present invention provides an adjustable shock absorber including a body defining a cavity. A member such as a piston is disposed in the body and at least partially separates the cavity in two first and second fluid chambers. A port extends through the piston and fluidly connects the first and second chambers during damping. A deflection disc, typically several, are arranged adjacent to the piston and one of the chambers to at least partially obstruct the port. The rigidity of the deflection discs determine in large part the damping rate provided by the ports. A flange member such as a washer is arranged in proximity to the deflection disc with the deflection disc arranged between the washer and the piston. The washer provides a fulcrum for the deflection discs. The deflection disc bend about the washer to unobstruct the port. The washer has a first portion with a first radial width defining a first rate of damping and a second portion with a second radial width different than the first radial width defining a second rate of damping different than the first rate of damping. The deflection disc bends about the portion of the radial width, that is in alignment with the port. Preferably, the washer is oval or elliptical shaped. An adjustment member such as a knob selectively rotates the washer relative to the deflection disc between the first and second radial widths.

Accordingly, the above invention provides a valve adjustment mechanism for use with deflection discs to provide shock absorber damping adjustment for a particular vehicle condition.

### BRIEF DESCRIPTION OF THE DRAWINGS

Other advantages of the present invention can be understood by reference to the following detailed description when considered in connection with the accompanying drawings wherein:
Figure 1 is a cross-sectional view of one embodiment of the present invention shock absorber;
Figure 2 is an end view of the piston and adjustable washer in the position shown in Figure 1;
Figure 3 is a cross-sectional view of the present invention shock absorber;
Figure 4 is an end view of the piston and washer in the position shown in Figure 3; and
Figure 5 is a schematic view of an adjustment mechanism for use with the washer.

### DETAILED DESCRIPTION OF THE PREFERRED EMBODIMENT

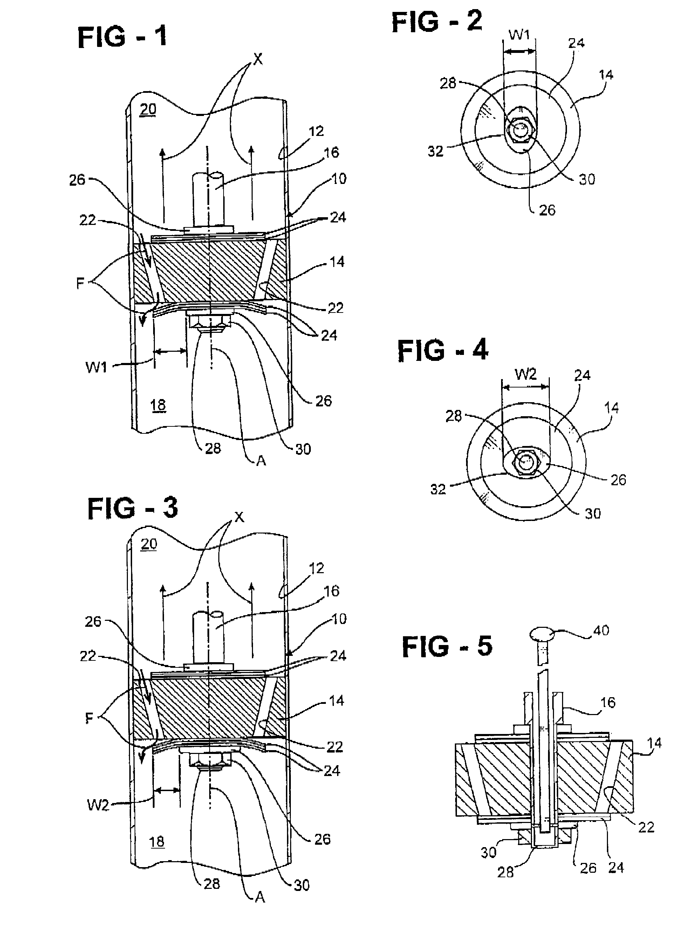

A cross-section of a shock absorber 10 is shown in Figure 1. The absorber 10 includes a cylindrical housing 12 with a piston 14 disposed therein. A rod 16 is connected to the piston 14 and transmits movement from the vehicle's suspension to the shock absorber 10 to move the piston 14 through the fluid in the housing 12. The piston 14 separates the housing 12 into a compression chamber 18 and a rebound chamber 20. The piston 14 moves further into the compression chamber 18 during a compression stroke, and the piston 14 moves further into the rebound chamber 20 during a rebound stroke.

The piston 14 includes fluid ports 22 that fluidly connect the compression 18 and rebound chambers 20 together. The ports 22 throttle fluid flow through the piston 14 between the chambers 18 and 20 to provide dampening. The flow characteristics such as flow rate through the ports 22 affects the overall damping characteristics of the absorber 10. Many shock absorbers employ a stack of deflection discs 24 secured to the piston 14 adjacent to the fluid ports 22 to selectively obstruct and unobstruct fluid flow through the ports 22. For example, the deflection discs 24 at the threaded end 28 of the rod 16 control the rate of flow through the ports 22 during the rebound stroke, which is indicated by reference letter X. Typically, a nut 30 is secured to the threaded end 28 to retain the deflection discs 24 against the piston 14.

The deflection discs 24 bend about a flange 26, which determines the amount of force needed by the fluid F to force the deflection discs away from the ports 22 to permit fluid flow from the rebound chamber 20 to the compression chamber 18. The number and rigidity of deflection discs 24 also determine the damping rate. The flange 26, if one is used at all, provides the fulcrum about which the discs 24 bend may be an angular washer having a circular perimeter. It is to be understood that the variable adjustment features provided by the washer 26 may be provided by other components within the shock absorber 10. The present invention incorporates a washer having a perimeter 32 that varies radially. For example, an oval washer may be used, as shown in Figure 2. The oval washer 26 has a first width W1 (shown in Figure 2) and a second width W2 (shown in Figure 4). The washer 26 may be rotated to change the point at which the deflection discs 24 bend about the washer 26. In this manner, the force generated by the fluid F may be changed to increase or decrease the damping rate provided by the deflection disc 24.

Figure 3 depicts the washer 26 in a position in which the width W2 is in alignment with the ports 22. In this position, more force from the fluid F is needed to open the deflection discs 24, which provides a harder shock absorber feel. The washer 26 may be rotated between the most narrow and softest position W1 and the widest and hardest shock absorber position W2 to provide a variable damping rate. Of course, it is to be understood that other non-circular perimeters 32 may be provided by the washer 26 to provide different variable damping rates.

Figure 5 depicts schematically an adjustment mechanism for rotating the washer 26 externally of the absorber 10. The adjustment mechanism may include an adjustment member 40 coupled to the washer 26. Rotation of the adjustment member 40 rotates the washer 26 between a plurality of positions. It is to be understood that any suitable adjustment mechanism may be used and that the adjustment mechanism shown in Figure 5 is only illustrative. Alternatively, the washer 26 may be rotated to a desired position and secured there upon initial assembly of the shock.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. An adjustable shock absorber comprising:
a body defining a cavity;
a member disposed in said body at least partially separating said cavity into first and second fluid chambers with a port extending through said member and fluidly connecting said first and second chambers during damping;
a deflection disc adjacent to said member adjacent in one of said chambers at least partially obstructing said port;
a flange in proximity to said deflection disc with said deflection disc interposed between said flange and said member with said deflection disc bending about said flange to unobstruct said port and define a rate of damping, said flange having a first portion with a first radial width defining a first rate of damping and a second portion with a second radial width different than said first radial width defining a second rate of damping different than said first rate of damping; and
an adjustment member selectively rotating said flange relative to said deflection disc between said first and second radial widths with said deflection disc bending about one of said first and second radial widths.

2. The adjustable shock absorber according to claim 1, wherein said body is a cylindrical housing and said member is a piston movable within said housing.

3. The adjustable shock absorber according to claim 1 or 2, wherein said piston and deflection disc are secured together onto a rod by a nut.

4. The adjustable shock absorber according to claim 3, wherein said flange is a removable washer adjacent to said nut.

5. The adjustable shock absorber according to any preceding claim, wherein said flange includes a plurality of radial widths between said first and second radial widths defining a plurality of rates of damping with said adjustment member selectively rotating said flange between said widths.

6. The adjustable shock absorber according to claim 5, wherein said flange includes a non-circular perimeter.

7. The adjustable shock absorber according to claim 6, wherein said perimeter is oval.

8. An adjustable shock absorber comprising:
a body defining a cavity;
a member disposed in said body at least partially separating said cavity into first and second fluid chambers with a port extending through said member and fluidly connecting said first and second chambers during damping;
a deflection disc adjacent to said member adjacent in one of said chambers at least partially obstructing said port;
a flange having a non-circular perimeter in proximity to said deflection disc with said deflection disc interposed between said flange and said member with said deflection disc bending about a portion of said perimeter to unobstruct said port and define a rate of damping;
an adjustment member selectively rotating said flange relative to said deflection disc between first and second positions to change said rate of damping.

9. The adjustable shock absorber according to claim 8, wherein said flange is rotatable relative to said deflection disc.

10. The adjustable shock absorber according to claim 8 or 9, wherein said flange is a washer.

11. The adjustable shock absorber according to claim 8 or 9 or 10, wherein said flange is oval.

12. A method of adjusting a shock absorber comprising the steps of:
a) providing a member with a fluid port;
b) providing a deflection disc at least partially obstructing the fluid port;
c) providing a flange with an irregular perimeter adjacent to the deflection disc; and
d) rotating the flange relative to the deflection disc with an adjustment member.

13. The method according to claim 12, wherein step d) includes manipulating an adjustment member mounted externally on the shock absorber.

14. The method according to claim 12, wherein d) includes arranging the flange relative to the deflection disc during initial assembly of the shock absorber.

15. The method according to claim 12 or 13 or 14, wherein the flange is a washer.
